(19) Europäisches Patentamt
European Patent Office
Office européen des brevets

(11) Publication number: **0 315 510 A2**

# (12) EUROPEAN PATENT APPLICATION

(21) Application number: **88402720.2**

(22) Date of filing: **28.10.88**

(51) Int. Cl.4: **B 01 D 13/02**
C 08 J 5/22

(30) Priority: **02.11.87 IL 84348**

(43) Date of publication of application:
**10.05.89 Bulletin 89/19**

(84) Designated Contracting States:
**AT BE CH DE ES FR GB GR IT LI LU NL SE**

(71) Applicant: **MEMBRANE PRODUCTS KIRYAT WEIZMANN LTD.**
**POB 138 Kiryat Weizmann**
**Rehovot (IL)**

(72) Inventor: **Linder, Charles**
**20 Derech Yavne**
**Rehovot (IL)**

**Perry, Mordechai**
**4 Kaf Zayin Benissan Street**
**Petach Tikva (IL)**

**Nemas, Mara**
**28/15 Tamar Street**
**Neve Monosson (IL)**

**Katraro, Reuven**
**11/3 Hakovesh Street**
**Rishon Lezion (IL)**

(74) Representative: **Kohn, Armand**
**5 Avenue Foch**
**F-92380 Garches (FR)**

## (54) Ion-transport selective membranes.

(57) Separation in solution of preselected ions from other ions of the same sign is effected with at least one membrane comprising (a) an ion transport selective film matrix formed from one or more hydrophobic, film-forming polymers comprsing covalently-attached ionizable radicals; and (b) a polymer effective to reduce the electrical resistance per micron thickness of film (a) by at least ℓ of an order of magnitude, and derived from units comprising monomers containing amino groups. A selective electrodialysis unit for effecting such separation comprises at least one thin, dense non-porous charged membrane defined as above, which has a dielectric constant and composition preselected to induce selective ion dissociation of a first group of charged ions upon the passage of current therethrough, so as to effect a substantial ion migration of the selected ion group across the membrane at a fraction larger than its relative concentration. The invention may be adapted for e.g. the selective transportation of nitrate ions from the diluting to the concentrating compartments of the unit, from an aqueous stream containing nitrate, bicarbonate and sulfate ions, the scale formation on the unit being thereby substantially reduced.

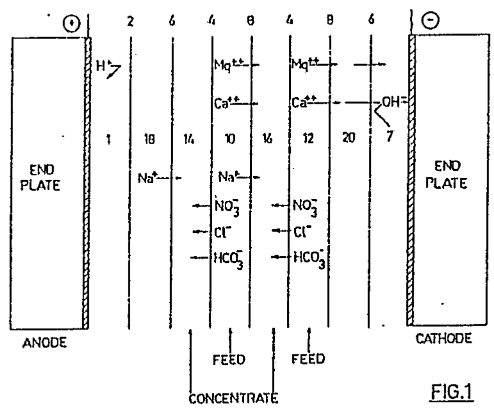


FIG.1

EP 0 315 510 A2

## Description

# ION-TRANSPORT SELECTIVE MEMBRANES

## FIELD OF THE INVENTION

The present invention relates to ion transport selective membranes having a low electrical resistance.

## BACKGROUND OF THE INVENTION

In US patent No. 4246092 there is described the use of known and new membranes specifically adapted to effect the selective electrodialytic separation of a first group of charged ions from a solution containing other charged ions having the same sign and optionally even the same valence as those of the first group. This patent describes thin, dense, non-porous, charged membranes made of water-insoluble hydrophobic polymeric materials containing covalently-bound ionizable groups. The present invention is concerned with such membranes, to which has been added a component which lowers their electrical resistance, either without loss of selectivity, or with a relatively low loss of selectivity.

The ability of a membrane to selectively pass one ion from a solution which contains also different ions carrying a charge of the same sign and valence is termed its selectivity. Selective transport in an electrodialytic process leads to substantial energy savings by allocating the current to the removal of a specific ion. which in an analogous non-selective process would be dissipated for the passage of undesired ions.

Furthermore, the purity of the products (dilute and brine) can be controlled to a large degree. Independent of economic considerations. the selective separation of charged species having the same electric charge is of great potential use for isolation and purification. High membrane selectivity, demonstrated in the present invention, has been thought to occur because of a selective ion dissociation mechanism induced in hydrophobic charged membranes. As a result of low dielectric constants of these membranes, selectivity has been previously associated with relatively high membrane resistance. In order to overcome the adverse economic consequences of high electrical resistance in the practical operation of an electrodialysis unit, it was necessary to reduce the thickness of the selective membrane layer to between a few microns and a fraction of a micron. This requirement complicates the production procedures, and production and quality control is expensive. Moreover, the ultrathin membranes are susceptible to mechanical damage, and have a relatively short life.

It has now been unexpectedly found, in accordance with the present invention. that by adding a polymeric component to the membrane during its preparation, a substantially lower electrical resistance can be achieved, while still maintaining an order of selectivity. which in the past was associated with high electrical resistance.

It should be noted that the property of selectivity discussed in the foregoing paragraphs is different from the characteristic property of most electrodialysis membranes, which preferentially transport and separate ions of different charge and valence, this property being termed permselectivity. The transport mechanism of selectivity, with which property the present invention is concerned, is believed to be based on selective ion solubilization-dissociation, whereas the known method of separation of mono- and multi-valent similarly charged ions is based on the principle of a strong electrostatic repulsion between the multivalent ions and the surface charge of an ion-exchange membrane with equally charged groups. These repulsion forces are much weaker in the case of the monovalent ions, which can thus permeate the charged barrier.

In the above US patent, the membrane is described as a polymer matrix with covalently-attached ionizable groups. The polymers used to make such a membrane are generally modified to incorporate such groups, in a predetermined quantity, so that the membrane possesses dielectric and ion dissociation constants which optimally induce selective ion dissociation of the first group of charged ions, so as to effect a substantial ionic migration thereof and consequential transfer across the membrane in a proportion higher than its relative concentration in the solution. It was shown, however, that membrane matrices containing non-polymeric or polymeric additives embedded therein or physically mixed therewith, suffer from disadvantages such as (i) elution of low molecular weight species in an electric field, and (ii) incompatibility of polymer additives with the membrane matrix leading to poor mechanical integrity and low selectivity and/or permeability. Such incompatibility is due to the mixing of a relatively hydrophobic matrix with a hydrophilic material containing ionizable groups needed for selectivity.

It is a general object of the present invention to provide an ion-transport selective membrane possessing low electrical resistance, and which otherwise overcomes the problems of the prior art selective membranes containing polymeric additives. Other objects of the invention will appear from the description which follows.

## SUMMARY OF THE INVENTION

The invention accordingly provides a membrane which comprises:

(a) an ion transport selective film matrix formed from one or more hydrophobic, film-forming polymers comprising covalently-attached ionizable radicals; and

(b) a polymer which is effective to reduce the electrical resistance per micron thickness of

film (a) by at least one half of an order of magnitude, and which is derived from units comprising monomers which contain amino groups, preferably tertiary amino groups. Primary and secondary amino groups may also be utilized, but are presently less preferred.

Preferably, polymer (b) is effective to reduce the electrical resistance per micron thickness of film (a) by at least one full of an order of magnitude.

Polymer (b) either may or may not impart selective ion transport properties to the film matrix.

Component (b) may, for example be a polymer derived from monomers comprising heterocyclic nitrogen-containing rings of aromatic character, and especially from such monomers comprising members selected from the group consisting of 2-and 4-vinylpyridines and mixtures thereof. Alternatively, component (b) may be for example, a polymer derived from monomers comprising both aromatic carbocyclic rings and tertiary amino groups. Component (b) may also be e.g. a polymer derived from monomers comprising both aromatic carbocyclic rings and primary and/or secondary and/or tertiary amino groups. Amino groups of any kind in component (b) may be bound to aromatic or acyclic (linear or branched-chain) moieties.

The invention also provides a process for the separation of preselected ions from other ions in the same solution which possess the same sign, which comprises subjecting the solution to the action of a membrane in accordance with the invention. Preferably, the preselected ions and the other ions bear negative charges, particularly identical unit negative charges. The invention may for example be used to separate nitrate ions from other monovalent anions. The invention moreover provides a method for the performance of selective electrodialytic separation of preselected ions from other ions in the same solution which possess the same sign, which comprises applying a current to an electrodialysis unit comprising at least one membrane in accordance with the present invention.

In another aspect, the invention provides a selective electrodialysis unit for the performance of selective electrodialytic separation of a first group of charged ions from a solution containing other charged ions having the same sign as said first group comprising at least one thin, dense non-porous charged electrodialysis membrane made of water-insoluble hydrophobic polymeric material containing covalently bound ionizable groups, wherein the membrane separates at least one diluting compartment from at least one concentrating compartment in the unit and wherein the membrane is in the form of a polymeric matrix optionally supported on a porous support and having a dielectric constant and composition preselected to induce selective ion dissociation of the first group of charged ions upon the passage of current therethrough, and thereby to effect a substantial ion migration of the selected ion group from at least one diluting compartment to at least one concentrating compartment in the unit and its preferential transference across said membrane at a fraction larger than its relative concentration in solution; the membrane being further characterized in that it comprises:

(a) an ion transport selective film matrix formed from one or more hydrophobic, film-forming polymers comprising covalentlyattached ionizable radicals; and

(b) a polymer which is effective to reduce the electrical resistance per micron thickness of film (a) by at least about one-half of an order of magnitude. and which is derived from units comprising monomers which contain amino groups.

## BRIEF DESCRIPTION OF THE DRAWINGS

Fig. 1 illustrates an electrodialysis stack which utilizes the membranes in accordance with the present invention.

## DETAILED DESCRIPTION OF THE INVENTION

According to the present invention, it was found that for the purpose of lowering membrane resistance, polymers could be added to the membrane, which were compatible with the matrix polymeric material containing the ionizable radicals. The added polymers and the matrix polymeric material could be mixed over a broad range with good compatibility, without loss of membrane strength.

Further, these polymer additives could be optionally covalently bound to the membrane matrix and possibly also crosslinked with itself to form a three-dimensional matrix. Such reactions fix the additive to the matrix, and thus prevent leaching and phase separation, so that the life of the membrane is extended.

Three types of membranes with the polymer additive may be prepared:

(1) A composite membrane of the selective barrier with an overall thickness of which lies in the range of about 100 to about 100.000 Å, preferably in the range of about 1000 to about 50,000 Å.

(2) An asymmetric Loeb type membrane, characterized by a thin dense layer of 0.1 to 5 microns, gradually extending into a more porous support of the same material. These membranes are generally made by a process termed phase inversion and the asymmetric structure is formed by precipitation in a nonsolvent of a complex casting solution.

(3) A thin, dense film having an overall thickness which lies in the range of about 1 to about 100 microns. These films may rest on nets or other supports, but may be used without supports, or with relatively open supports, unlike the generally thinner composites in category (1). They have in general, a higher electrical resistance than categories (1) and (2).

While the present invention does not depend on any particular theoretical basis, nevertheless the following guidelines are provided for selecting membrane materials. The transport process makes use of the concept of association of ions

within media of low and medium dielectric constants. In such media, the major fraction of the ions will be in the form of ion pairs, and as such, will not participate in electrical transport processes such as electrical conductance; these transport processes will be governed mainly by the dissociated ions only. The extent of the dissociation of the two ion groups having the same electric charge from a common and oppositely charged counter ion, will depend upon specific properties of the ions (such as ionic radii) and on the specific interactions which these ions may undergo with the solvent or matrix molecules. To enhance matrix/ion interactions, certain ionizable radicals are bound to the matrix. Without these ionic or polar radicals, the extent of salt-matrix interaction will be too low, as the latter are of medium or low dielectric constant. Thus, the combination of hydrophobic matrix and charged moieties leads to the selective dissociation of one salt over another. This combination leads to selective transport of a selected charged ion upon the application of an electric field. However, the amount of ionizable radicals in the matrix must be limited to minimize water uptake.

The same principle was applied in the present case by incorporating charged radicals into hydrophobic, film forming polymers. Under the term hydrophobic polymers, we include polymers which may contain only small amounts of absorbed water; water in relatively larger amounts significantly increases the dielectric constant of the matrix, destroying or decreasing selectivity.

The selectivity principle was demonstrated for several hydrophobic polymer matrices with water absorption values varying from as low as 0.03% in the case of polystyrene, to as high as 14% in the case of cellulose acetate, which was used in several examples herein. We thus believe that any film forming polymer having water absorption in the above mentioned range, may serve as an adequate matrix for membrane preparation. The following list includes some of the polymers which are possible candidates for the preparation of nitrate selective membranes.

Suitable materials for the matrix may be, for example, polymers selected from the group consisting of cellulose esters, cellulose ethers, aromatic polysulfones, acrylonitrile homo- and co-polymers, polyamides, vinyl chloride homo- and co-polymers, vinylidene chloride homo- and co-polymers, epoxy resins, polyarylene oxides (e.g. poly[2,6-dimethyl-]phenylene oxide), polycarbonates, homo- and co-polymers derived from monomers comprising heterocyclic rings, polyvinylidene fluoride, polytetrafluoroethylene, polyesters, polyelectrolyte complexes, polyolefins (e.g. polyethylene and polypropylene), homo- and co- polymers formed from monomers comprising polystyrene or derivatives thereof, polyetherimides, polyether ketones, polyamide imides, polyimides and mixtures thereof.

There follows a list of some representative materials and their equilibrium water uptake.

| Polymeric material | Water absorption 24 hours (%) |
|---|---|
| 1. Polyethylene (low density) | 0.02 |
| 2. Polyethylene (medium density) | 0.02 |
| 3. Polyethylene (high density) | 0.01 |
| 4. Polypropylene | 0.01 |
| 5. Acrylic resins | 0.2 - 0.4 |
| 6. Polystyrene | 0.03 - 0.05 |
| 7. Polyvinyl chloride | 0.07 - 0.40 |
| 8. Polyvinylidene chloride | 0.11 |
| 9. Fluorinated polyethylene/polypropylene copolymer, | 0.01 |
| 10. Polytetrafluoroethylene | 0.01 |
| 11. Nylon 66 | 1.5 |
| 12. Acetal resin | 0.12 - 0.25 |
| 13. Polyurethane resin | 0.60 - 0.80 |
| 14. Cellulose acetate | 2.1 - 4.2 |
| 15. Cellulose acetate butyrate | 0.9 - 2.2 |
| 16. Ethyl cellulose | 1.1 - 1.5 |

Cellulosic membranes (e.g.) are one preferred group of membranes in the case of nitrate selective transport in the presence of e.g. chloride and/or sulfate ions. Another preferred group consists of membranes prepared from haloalkylated (e.g. halomethylated or haloethylated) aromatic polysulfones, polyphenyleneoxides, aromatic polyepoxides and styrene homo- and co-polymers.

Due to the fact that any two ions differ to at least some extent from each other with respect to some of their properties such as ionic radii, electric density and distribution etc., the different specific interactions expected with a polymer matrix will lead to differences in their dissociation constants. It is thus believed that such selective dissociation will be found in numerous cases as exemplified herein.

With respect to covalently bound radicals, the choice is even wider. The role of the charged radical is to introduce into the membrane permselectivity. The basic requirement is that such radicals do not lead to excessive water absorption and to a consequent excessive increase of the membrane's hydrophilicity. This can be evenly controlled by either keeping the concentration of the charged radicals low, or by using bulky hydrophobic radicals with low hydration numbers.

Suitable covalently-attached ionizable radicals may be selected from the group consisting of sulfato, sulfonic acid, carboxylic acid, primary amino, secondary amino, tertiary amino, quaternary ammonium, sulfonium, phosphonium, pyridinium, quinolinium, isoquinolinium, other heterocyclic ring nitrogen atom-derived quaternary ammonium, disulfimide such as $[-SO_2]_2N^+ X^-$ where X = H, Na, K or $NH_4$, metal salt complexed macrocyclic polyether/crown compounds e.g. cyclic pentaether benzo-15-crown 5 with sodium iodide or dibenzo-18-crown 6 or dicyclohexyl-18-crown 6 and tetramethyl dibenzo-18-crown 6 with potassium or sodium salts, or with rubidium, cesium or ammonium isothiocyanate, and bond coordinated metal complexes with high equilibrium binding constants, as for example, copper with hydroxyamines, zinc with di-2-ethylhexylphosphoric acid, nickel with dioximes, and transition metal salts with polyamines.

The essence of the present invention resides in the covalent binding of an ionizable radical, rather than in the nature or identity of a specific ionizable radical, bearing in mind of course that different radicals will preferably be chosen in relation to the choice to be made, of the ions to be separated, as the optimal desired separation of ions will depend on the specific interactions, such as specific binding of one ion class compared to another. Thus, in the case of achieving selective nitrate transport over chloride or sulfate, a polymer membrane (and more particularly a membrane prepared from a cellulose ester such as cellulose acetate), with bound quaternary ammonium radicals is preferred. Preferably, such radicals have the formula

$R^1R^2R^3N^+(X^-)$,

wherein X is an anion and $R^1$ , $R^2$ and $R^3$ are the same or different linear or branched alkyls containing at least five carbon atoms, such as pentyl, hexyl, heptyl, octyl, nonyl, decyl, undecyl or dodecyl. In one embodiment of the invention, $R^1$, $R^2$ and $R^3$ may represent identical alkyls. Below pentyl, alkyls such as butyl, propyl, ethyl and methyl do not give the same high selectivity towards nitrates as do the higher molecular weight chains, but may be utilized as one of $R^1$, $R^2$ and $R^3$, the other two of $R^1$, $R^2$ and $R^3$ being the same or different alkyls containing at least five carbon atoms. In addition to aliphatic ammonium, heterocyclic ammoniums such as pyridinium. quinolinium and isoquinolinium were also found to give good selectivity.

Where the above-mentioned quaternary ammonium radicals are bound to a cellulose ester or ether, they are bound through nitrogen to carbon atoms of the cellulose backbone; however, in this case, it was found that trimethyl, triethyl and tripropyl quaternary ammonium radicals did not give good selectivity. These lower molecular weight radicals can however be utilized in conjunction with the other matrix materials mentioned above, in which case they are bound to the carbon atoms of an aliphatic or aromatic backbone, or they may be removed from the backbone and attached thereto via aliphatic radicals such as $C_n H_{2n}$ (linear or branched. where n is 1 to 8. preferably 1 or 2) or via aromatic radicals $-Z-C_6H_4-Z'-$ where Z is and Z′ are each a valence bond or $C_n H_{2n}$ (linear or branched, where n is 1 to 8, preferably 1 or 2), or Z′ may also be N, O or S.

While many of the foregoing radicals and polymers give good selectivity towards nitrates, the electrical resistance of the resulting membranes is high. For example, conventional membranes made from polymer with hydroxyl pendents are hydrophilic and have resistances of 2-3 ohms per micron, while the selective membranes, because they are hydrophobic, have high resistances of 100+ ohms per micron membrane thickness. To decrease the resistance of selected membranes they should be made as thin as possible, preferably not more than 10 microns, more preferably not more than 1 micron in thickness. This requirement necessitates a composite structure, the selective membranes resting on a porous support, which in itself does not significantly increase electrical resistance. Both thin film composites and asymmetric membranes may be used.

In addition, any method which can also reduce electrical resistance while maintaining selectivity is important. It was thus both significant and surprising to find that the addition of a polymer such as polyvinylpyridine to the charged matrix decreases resistance by at least an order of magnitude without reducing selectivity. It was surprising that this should happen with a relatively hydrophilic polymer without loss of selectivity, and without loss of physical integrity of the resulting membrane.

One preferred polymer additive for the ionically-derivatized cellulose acetate membrane is poly-(4-vinyl)pyridine ("P4VP"). Other polymers are poly-(2-vinyl)pyridine and bi- or ter- or higher order multi-polymers of 2- and/or 4-vinylpyridine with one or more other monomers selected e.g. from groups undergoing addition polymerization such as alkyl acrylate or methacrylate (such as methyl or butyl acrylate, or methyl methacrylate), styrene and substituted derivatives thereof (such as dichlorostyrene), vinyl acetate, acrylonitrile, vinyl chloride, vinylidene chloride, 2-chloro-1,3-butadiene and isoprene, Other polymers may be chosen from materials containing primary, secondary and especially tertiary amine radicals either as side-chains or as part of a main chain, such that the polymers are water-insoluble under basic conditions. These polymers may be copolymers or homopolymers.

The membranes according to the present invention may be prepared by one of the following methods:

(1) A polymer with bound ionizable radicals may be prepared, isolated and purified, in accordance with e.g. Ex 1 of US 4246092. A solution is then prepared containing both this polymer and added polymer, and a membrane is prepared therefrom. Preferably, some reactive radicals of the same type which were used to bind or form the ionizable radicals in the original membrane still remain, and may be used to bind the added polymer.

(2) A polymer containing reactive radicals such as tosylates or alkyl halides (which upon reaction with tertiary amines or imines or heterocyclic tertiary amines form quaternary ammonium) is mixed in solution with the added polymer and a monomeric tertiary amine. A membrane is then formed from the solution, and the tertiary amines and polymeric additive will react with the polymer containing reactive radicals, upon drying and/or heating.

(3) The polymer for the membrane matrix and which contains reactive radicals is dissolved

with the tertiary amine in a solvent and heated to produce reaction. The solution is cooled, the polymer additive is added, and a membrane is formed. Alternatively, the polymer additive may be added to the hot solution and the membrane is formed either while the solution is still hot, or after cooling.

The reactive polymer used to bind the ionizable radical should have enough reactive radicals to bind a sufficient number of ionizable radicals for selectivity. This number usually varies between 0.05 and 0.6 equivalents per kg. of polymer; however, cellulose diacetate (e.g. Eastman Kodak CA 346, 24) the range is 0.1 to 0.7 eq./kg. Below and above this range selectivity is diminished. High values increase hydrophilicity, thus reducing selective dissociation and giving low selectivity. Low values limit dissociation and mobility, and selectivity is lost through lack of transport under an electric field. Other polymers, more hydrophobic than cellulose acetate, require a higher range of ionizable radicals to achieve the balance of dielectric constant, required for selectivity. In addition to affecting selectivity, increasing ionic charge decreases electrical resistance. For example, with polysulphone membranes the optimum range may be 0.4 to 1.0 eq./kg. Though otherwise desirable, decreasing resistance is associated, beyond an optimum, with lower selectivity. The ionic charge range of maximum selectivity concomitant with a relatively low electrical resistance, varies with the nature of the membrane matrix polymer, and it can happen that a minimum desirable level of selectivity is still associated with high electrical resistance. It is, however, the significance of the present invention, that by the addition of a polymer additive, the electrical resistance may be lowered by at least an order of magnitude, without loss of selectivity.

Methods for forming thin films are well-known, see e.g. US Patents Nos. 4246092, 3951815 and 4244817, and EP 0010425, the subject matter of which patents is incorporated by reference in the present application. Moreover, methods for forming asymmetric films as for example described in US Patents Nos. 3133132, 3133137 and 3686116, are also incorporated herein by reference. It is important that the thin film either as a composite or as the uppermost layer of the asymmetric membrane be dense and nonporous, to achieve the required matrix solute interactions required for selectivity.

As regards the electrodialysis unit provided by the invention, the first group of charged ions may be nitrate ions, or alternatively the first group may be selected from the group consisting of positively or negatively charged organic molecules. The unit may for example be adapted for the treatment of an aqueous stream containing nitrate, bicarbonate and sulfate ions, and for the selective transportation of nitrate ions from the diluting to the concentrating compartments of the unit without accompanying transport of said bicarbonate and sulfate ions, whereby the problem of scale formation on said unit is substantially reduced. The unit may also be adapted for the treatment of an aqueous stream containing nitrate, bicarbonate, chloride and sulfate ions, and for the selective transportation of nitrate ions from the diluting to the concentrating compartments of the unit without accompanying transport of bicarbonate, chloride and sulfate ions, for producing a concentrated brine rich in nitrate ions which can be used for fertilization purposes.

It will be evident to those skilled in the art how the membranes of the present invention may be adapted for the treatment processes described in the preceding paragraph, and in this connection, mention is again made of US 4246092.

It is preferred that the membrane in the selective electrodialysis unit of the invention be selected from the group consisting of asymmetric, composite and thin supported charged membranes. It is further preferred that the membrane is characterized by a low dielectric constant in the range of about 2 to about 7.

## Methods of measurement

A convenient property for characterizing the membranes of the present invention is the fraction of the ionic current carried across the membrane by a given ionic species, i, called the transport number ($\tau_i$ ) In effect $\tau_i = J_i$ (F/I) for zero chemical gradients ($u_i$) and volume flow ($J_v$). I is the electric current, $J_i$ is the flow of species i and F is Faraday's constant (96500 coulombs).

Transport numbers were calculated from membrane potentials determined in a setup wherein the membrane is inserted between the two halves of a Perspex cell and filled with testing solution into which two calomel electrodes were immersed. The potential ($\psi$) established between the electrodes is measured by means of a millivoltmeter.

The relation between the measured membrane potential and the transport number is given by

$\Delta\psi = (1/F)(\Sigma/i)\tau_i(\ u_i\ )$.

In the absence of water for a single univalent salt this equation gives:

$\Delta\psi = -(RT/F)[\tau_1(a'/a'') - \tau_1(a'/a'')]$; and

$\tau_1 = \{[\Delta\psi/59.9 \log(\ a'/a'')] + 1\} \cdot {}^1/_2$

Temperature correction of the therm RT/F is performed for each temperature. $\tau_1$ determines the discrimination between positive and negative ions in a uni-univalent salt and is usually called permselectivity.

The activity coefficients for the calculation of the activity were taken from M.Gazith "Activity Coefficients of Various Electrolytes", Israel Atomic Energy Commission, Soreg Research Establishment, Feb, 1964.

For the case of two counterions without co-ion invasion ($NO_3^-$ and $Cl^-$), the above equation becomes:

$\Delta\psi = )RT/F[\tau_{NO3^-} \ . \ 1n(a'_{NO3^-}/a''_{NO3^-}) + \tau_{Cl^-}1n(a'_{C1^-}a''_{C1^-}]$.

If the activity of one of the ions ($Cl^-$) is kept equal on both sides of the membrane its contribution to the membrane potential vanishes, the second therm of the equation is cancelled, and thus the transport number of the counterion ($NO_3^-$) is calculated from the equation

$\tau_{NO3^-} = \Delta\psi/\Delta\psi$theoret.)

where $\Delta\psi$(theoret.) = (59.9 x K°/298.15).

$\log(a'_{NO3^-}/a''_{NO3^-}$, where K° is the absolute temperature. Stable membrane potentials are established within 1-2 minutes. For further reliability, this determination was repeated 3-4 times using fresh solutions each time.

Membrane conductance was determined in an experimental setup described in detail in Research and Development Report No. 77, test manual for permselective membranes, OSW PB 181575, 1964. A Wayne Kerr impedance bridge was used in all these measurements. The temperature was controlled within +/- 0.1%. Membrane thickness was measured using a mechanical micrometer with an accuracy of +/- 1 micron.

Determination of fixed charge density by ion exchange

Membranes were equilibrated in 1M $NaNO_3$ overnight, rinsed with distilled water for several hours, and then left overnight in a known minimal volume of 1M NaCl. Knowing the concentration of the exchanged nitrate ion and the weight of the wet membrane, the charge density could be calculated in mMoles/kg. membrane. This data was compared to the total amount of nitrogen due to quaternary ammonium groups obtained by elemental analysis.

Electrodialysis (ED) experiments

The ED stack used in these experiments consists of two PVC end plates and rubber gaskets. A stainless steel press was designed for the easy and frequent replacement of the solutions and membranes. Rubber gaskets of a sheet flow type enable a separate supply and circulation of various solutions and the analysis of their compositions during the experiments. Each of the gaskets incorporate a polypropylene turbulence-promoting spacer. Two electrodes which may be made e.g. of platinum net, and having an area of 10 cm. x 3 cm., are incorporated into the gaskets adjacent to the end plates. The sequence of various gaskets and membranes is described in Fig. 1. The anions are transported through anion exchange membranes 2 (e.g. "Selemion") and through nitrate selective membranes 4, and the cations are transported through commercial cation exchange membranes 6 (e.g. "Selemion") and 8 (low diffusion leak), from diluting cells (10, 12) into the concentrating cells (14, 16).

In order to eliminate the contact between the acid solutions produced in the anode compartment and the sensitive nitrate selective membrane, an intermediate trap 18 containing 0.1M NaCl is introduced between the anode and concentrate cells. Sodium ions are transported from this cell into the adjacent concentrate cell 14. The trap 20 containing 0.1M NaCl is introduced in order to eliminate the diffusion of hydroxyl ions from the cathode towards the nitrate selective membrane. The stream velocity in the diluted cell is varied between 3 and 13 cm./sec. It was noted that the selectivity is significantly reduced when the linear flow velocity is kept in the lower part of this range.

The transport number of nitrate ions for calculting selectivity are obtained in mixed solutions of sodium nitrate and sodium chloride. The concentration of NaCl was equal on both sides of the membrane (typically 5mM/1.), while the ratio of sodium nitrate between te two solutions was kept at two (e.g. 2 mM/1. to 1 mM/1.) To measure permeability, a two-fold ratio of sodium nitrate concentrations (without sodium chloride )typically 100 mM/1. to 50 mM/1., were used. To measure conductivity 100 mM./1. sodium nitrate solution was used on both sides of the membrane.

It will be appreciated that the electrodes at each end of the electrical stage within the stack distribute the current over the membranes. These electrodes may be in general flat plates of metal (such as niobium or titanium) or carbon and are usually plated with platinum or (in the case of cathodes) stainless steel. In the electrodialysis reversal process, both electrodes are platinum-plated since both alternate in being the cathode and anode. The example of platinum net electrodes has already been mentioned.

The electrodes are exposed to separate rinse water streams (1, 7) of e.g. 0.1M NaCl (but see below) to make electrical contact and to carry away electrochemical products of the electrode reactions. In the course of operation oxidation and reduction reactions take place at the anode and cathode, respectively. These reactions create problems which result in (i) degradation of the electrodes, especially at the anode, where oxidation can result in erosion of the metal, and (ii) the production of chlorine and/or oxygen, depending on the pH of the constituents of the rinse stream. The effect on the cathode is not quite so severe and usually results in the formation of hydrogen gas. This in turn could create a high pH that may favor the formation of scale.

In operation, the rinse streams are usually acidified to inhibit scaling; by combining and recycling these streams from the anode and cathode compartments, the amount of acid additive necessary may be reduced. For electrical conductivity, the rinse solutions usually contain electrolytes such as sodium sulfate or nitrate, and less preferably sodium chloride. The electrodes must be replaced periodically. In the electrodialysis reversal process, each electrode alternates between being cathode and anode, several times per hour. This alternation serves to equalize the wear on the electrodes and chemically removes scale formed during the cathode operation by means of acid generated during its anodic cycle.

The invention will now be illustrated by non-limitative examples.

## EXAMPLE I

Cellulose acetate tosylate preparation

Cellulose acetate (80 g. Eastman 398-10) and tosyl chloride (420 g.) were separately dissolved in 400 and 950 ml. dry pyridine, respectively. The solutions were mixed and left at room temperature

for 20 hours with stirring. After this time, the mixture was cooled to 0°C and mixed with an equal volume of ice-cold acetone to decompose the excess of tosyl chloride. After 10 minutes mixing in a bath at 0°C, the polymer was precipitated by vigorous stirring with at least 10 vols. distilled water, the mixture stirred for 30 minutes, filtered and washed well with water. The polymer was dried at 60°C for 48 hours (minimum).

Preparation of cellulose acetate trioctylamine tosylate (CA-N[OCT]$_3$ -TOS)

Cellulose acetate tosylate (100 g.) was dissolved in dibromomethane (800 ml.) by stirring and heating, and a solution of trioctylamine (200 ml.) in dibromomethane (100 ml.) was added thereto in small portions. The temperature was then raised to 80°C and the mixture was stirred at this temperature for 20 hours. The solution was cooled to room temperature and the resulting polymer was precipitated with 2.5 l,. ethyl alcohol, stirred for 15 minutes, filtered, washed well with additional portions of ethanol and dried at 50-55°C for 24 hours. The polymer was redissolved in 800 ml, methylene chloride and reprecipitated with ethanol.

Preparation of membranes

(a) Solns.: 7.5% w/v soln. of CA-N[OCT]$_3$ -TOS in dibromomethane.

(b) Support: prior to use, 0.05 mm. thick cellulose acetate support TU-AF-2050.430 (Kalle) was immersed in 0.5% sodium dodecyl sulfate solution for 15 minutes, washed well with distilled water and dried between filter papers.

(c) The membrane: This was cast on the foregoing support, dried 30 minutes at room temperature and stored in water. The resultant membrane had an ion exchange capacity of 350 meq./g. and the nitrate selectivity, ($NO_3^-$) permselectivity and resistance were 0.80, 0.72 and 505 ohms/micron, respectively, This resistance was reduced significantly in a membrane containing additionally P4VP. This was prepared in the following way. A 10% w/v solution of CA-N[OCT]$_3$ -TOS in dibromomethane was mixed with a 10% w/v solution of P4VP in the same solvent, in a 2:1 ratio. A membrane was then made from this solution as described above. Nitrate selectivity, permselectivity and resistance were 0.72, 0.83 and 21 ohms/micron, respectively. The resistance was reduced by 24 x without a significant loss of selectivity.

When this membrane is placed in an ED cell which is operated at 15 mA current, with a liquid flow of 10 cm./sec., 6.4 times more nitrate than chloride ion was transported across the membrane (feed 5 mM $Cl^-$ to 1 mM $NO_3^-$ ).

If methylene chloride is used instead of methylene bromide, the results are essentially the same, i.e. a significant reduction of resistance without loss of selectivity. Higher concentrations of P4VP, as for example, 1 part CA-N[OCT]$_3$ -TOS and 1 part P4VP in the casting solution gives a membrane with nitrate selectivity of only 0.44, with a resistance of 12 ohms/micron; in this case, the resistance is further reduced, but selectivity is lost. If however, a smaller relative concentration of P4VP is used, the resistance is higher. For example, CA-N[OCT]$_3$ -TOS/P4VP in a concentration ratio of 1:0.1 gives a membrane with a selectivity of 0.77 and a resistance of 66.6 ohms/micron. This represents a reduction in resistance of 6.7 x and such membranes may be of practical use.

## EXAMPLE II

Example I is carried out, but instead of CA-N[OCT]$_3$-TOS, the tridodecylamine analogue is prepared (in effect CA-N[DODEC]$_3$ -TOS). Thus, a solution of cellulose acetate tosylate (100 g.) in dibromomethane (800 ml.) is reacted with a solution of tridodecylamine (200 ml.) in the same solvent (200 ml.), the subsequent operations being carried out as in Example I. Membranes made from this polymer without P4VP in dibromomethane had a nitrate selectivity, permselectivity and resistance of 0.94, 0.60 and 655 ohms/micron, respectively. A membrane containing CA-N[DODEC]$_3$-TOS/P4VP in the ratio of 1:0.5 had a nitrate selectivity, permselectivity and resistance of 0.67, 0.78 and 30 ohms/micron, respectively.

## EXAMPLE III

Example I is repeated using triheptylamine instead of trioctylamine. The nitrate selectivity, permselectivity and resistance of a membrane without and with P4VP (ratio of CA-N[HEPTYL]$_3$ -TOS/P4VP, 1:5) were 0.73, 0.78 and 303 ohms/micron, respectively, as compared with 0.68, 0.75 and 18 ohms/micron respectively.

## EXAMPLE IV

Similar results were achieved with trihexylamine, but membranes of cellulose acetate and tributylamines did not afford selectivity.

## EXAMPLE V

Example III is repeated using poly-(2-vinyl)pyridine (P2VP) instead of P4VP, to give a reduction in resistance from 420 to 16 ohms/micron, without and with the addition of P2VP, respectively.

## EXAMPLE VI

Example I is repeated using a 4-vinylpyridine/methyl methacrylate copolymer instead of P4VP, to give a reduction in resistance from 750 to 30 ohms/micron, without and with the addition of copolymer, respectively.

EXAMPLE VII

Example I is repeated using a copolymer as stated below instead of P4VP, to give a reduction in resistance from 625 to 46 ohms/micron, without and with the addition of copolymer, respectively. The copolymer used in this example was derived from vinyl chloride and 2-(triheptylammonium)ethyl acrylate [tosylate].

EXAMPLE VIII

Example I is repeated using instead of P4VP, a polyepichlorohydrin polymer which has been partly derivatized with pyridine giving 0.7 meq./g. pyridinium chloride pendents, to give a reduction in resistance from 625 to 16 ohms/micron, without and with the addition of copolymer, respectively, with only a 10% loss of selectivity.

EXAMPLE IX

Example I is repeated using poly(p-tributylamino)styrene instead of P4VP, to give a reduction in resistance from 825 to 36 ohms/micron, without and with the addition of this polymer, respectively.

EXAMPLE X

Example I is repeated using vinyl chloride/N-vinylimidazole copolymer instead of P4VP, to give a reduction in resistance from 760 to 18 ohms/micron, without and with the addition of this copolymer, respectively.

EXAMPLE XI

Example I is repeated using poly(p-chloromethyl)styrene instead of cellulose acetate tosylate. The resulting membranes had a selectivity, permselectivity and resistance of 0.85, 0.82 and 1200 ohms/micron. When P4VP was added as in Example I, the resistance was reduced to 82 ohms/micron, with a nitrate selectivity of 0.79.

While the present invention has been particularly described with regard to presently preferred embodiments, it will be evident to those skilled in the art that many variations and modifications may be made. The invention is accordingly not to be construed as limited to such embodiments, rather its scope is to be defined only in accordance with the claims which follow.

**Claims**

1. A membrane which comprises:

(a) an ion transport selective film matrix formed from one or more hydrophobic, film-forming polymers comprising covalently-attached ionizable radicals; **characterized in that it contains :**

(b) a polymer which is effective to reduce the electrical resistance per micron thickness of film (a) by at least about one-half of an order of magnitude, and which is derived from units comprising monomers which contain amino groups. said amino groups being primary and/or secondary and/or tertiary amino groups.

2. A membrane according to claim 1, wherein component (b) possesses one of the following characteristics (i) or (ii):

(i) it is a polymer derived from monomers comprising heterocyclic nitrogen-containing rings of aromatic character, preferably selected from the group consisting of 2- and 4-vinylpyridines and mixtures thereof, which monomers may be homopolymers, or may be co-, ter- or multi-polymerized with one or more other monomers selected from the group consisting of an alkyl acrylate or methacrylate, styrene and substituted derivatives thereof, vinyl acetate, acrylonitrile, vinyl chloride, vinylidene chloride, 2-chloro-1,3-butadiene and isoprene.

(ii) it is a polymer derived from monomers comprising both aromatic carbocyclic rings and tertiary amino groups.

3. A membrane according to either claim 1 or claim 2, wherein said matrix is derived from polymers selected from the group consisting of cellulose esters, cellulose ethers, aromatic polysulfones, acrylonitrile homo- and co-polymers, polyamides, vinyl chloride homo- and co-polymers, vinylidene chloride homo-and co-polymers, epoxy resins, polyarylene oxides, polycarbonates, homo- and co-polymers derived from monomers comprising heterocyclic rings, polyvinylidene fluoride, polytetrafluoroethylene, polyesters, polyelectrolyte complexes, polyolefins, homo- and co-polymers formed from monomers comprising polystyrene or derivatives thereof, polyetherimides, polyether ketones, polyamide imides, polyimides and mixtures thereof, the matrix being preferably derived from polymers selected from the group consisting of low, medium or high density polyethylene, polypropylene, acrylic resins, polystyrene, polyvinyl chloride, polyvinylidene chloride, fluorinated polyethylene/polypropylene copolymer, polytetrafluoroethylene, nylon 66, acetal resin, polyurethane resin, cellulose acetate, cellulose acetate butyrate and ethyl cellulose.

4. A membrane according to any of the preceding claims, wherein the covalently-attached ionizable radicals are selected from the group consisting of sulfato, sulfonic acid, carboxylic acid, primary amino, secondary amino, tertiary amino, quaternary ammonium, sulfonium, phosphonium, pyridinium, quinolinium, isoquinolinium, other heterocyclic ring nitrogen atom-derived quaternary ammonium, disulfimide, metal salt complexed macrocyclic polyether/crown compounds and bond coordinated metal complexes with high equilibrium binding constants, the matrix being preferably derived from a preselected polymer to which is attached by covalent bonds a plurality of quaternary ammonium radicals of formula
$R^1R^2R^3\overset{+}{N}(X^-)$-,
wherein $R^1$ is alkyl, $R^2$ and $R^3$ are each the same or different alkyls containing at least five carbon atoms and, but preferably $R^1$, $R^2$ and $R^3$ are identical alkyls and each is selected from the group consisting of pentyl, hexyl, heptyl, octyl, nonyl, decyl, undecyl and dodecyl, and X is an anion.

5. A membrane according to any of the preceding claims, which takes the form of one of the following, (A), (B) and (C), namely:

(A) a composite membrane, the overall thickness of the selective layer thereof lying within the range of about 100 to about 100 000 Å and preferably within the range of about 1000 to about 50,000 Å;

(B) an asymmetric Loeb type membrane;

(C) a dense film, the overall thickness of which lies in the range of about 1 to about 100 microns, preferably resting on a net or other support.

6. A membrane according to any of the preceding claims, wherein component (b) is covalently bound to component (a), and component (b) is preferably also cross-linked with itself.

7. A process for the separation of preselected ions from other ions in the same solution which possess the same sign, which comprises subjecting said solution to the action of a membrane according to any of the preceding claims.

8. A process according to claim 7, wherein said preselected ions and said other ions bear negative charges, preferably identical unit negative charges, most preferably the preselected ions being nitrate ions and the said other ions being other monovalent anions.

9. A method for the performance of selective electrodialytic separation of preselected ions from other ions in the same solution which possess the same sign, which comprises applying a current to an electrodialysis unit comprising at least one membrane according to any of the preceding claims.

10. A selective electrodialysis unit for the performance of selective electrodialytic separation of a first group of charged ions from a solution containing other charged ions having the same sign as said first group comprising at least one thin, dense non-porous charged electrodialysis membrane made of water-insoluble hydrophobic polymeric material containing covalently bound ionizable groups, wherein said membrane separates at least one diluting compartment from at least one concentrating compartment in said unit and wherein said membrane is in the form of a polymeric matrix optionally supported on a porous support and having a dielectric constant and composition preselected to induce selective ion dissociation of said first group of charged ions upon the passage of current therethrough, and thereby to effect a substantial ion migration of said selected ion group from at least one diluting compartment to at least one concentrating compartment in said unit and its preferential transference across said membrane at a fraction larger than its relative concentration in solution;
and said membrane being further characterized in that it comprises:

(a) an ion transport selective film matrix formed from one or more hydrophobic, film-forming polymers comprising covalently-attached ionizable radicals; and

(b) a polymer which is effective to reduce the electrical resistance per micron thickness of film (a) by at least about one-half of an order of magnitude, and which is derived from units comprising monomers which contain amino groups.

11. A selective electrodialysis unit according to claim 10, adapted for the treatment of an aqueous stream containing nitrate, bicarbonate and sulfate ions, and for the selective transportation of nitrate ions from the diluting to the concentrating compartments of said unit without accompanying transport of said bicarbonate and sulfate ions, whereby the problem of scale formation on said unit is substantially reduced.

12. A selective electrodialysis unit according to either claim 10 or claim 11, wherein said membrane is selected from the group consisting of asymmetric, composite and thin supported charged membranes.

13. A selective electrodialysis unit according to any of claims 10 to 12, wherein said first group of charged ions are nitrate ions, or are selected from the group consisting of positively or negatively charged organic molecules.

14. A selective electrodialysis unit according to any of claims 10 to 13, wherein said membrane is characterized by a low dielectric constant in the range of about 2 to about 7.

15. A selective electrodialysis unit according to claim 10, adapted for the treatment of an aqueous stream containing nitrate, bicarbonate, chloride and sulfate ions, and for the selective transportation of nitrate ions from the diluting to the concentrating compartments of said unit without accompanying transport of said bicarbonate, chloride and sulfate ions, for producing a concentrated brine rich in nitrate ions which can be used for fertilization purposes.

16. A membrane according to claim 4, wherein said quaternary ammonium radicals are bound to the carbon atoms of the polymer backbone

by a link -Q-, where Q is a member selected from the group consisting of: a valence bond, divalent aliphatic radicals of formula $C_n H_{2n}$ (linear or branched, where n is 1 to 8), and aromatic radicals of formula $-Z-C_6H_4-Z'-$ where Z and Z′ are each a valence bond or a radical of formula $C_nH_{2n}$ having the previous meaning and Z′ may also be N, O or S.

17. A membrane according to claim 16, which takes the form of one of the following, (A), (B) and (C), namely:

(A) a composite membrane, the overall thickness of the selective layer thereof lying within the range of about 100 to about 100,000 Å, and preferably within the range of about 1000 to about 50,000 Å;

(B) an asymmetric Loeb type membrane;

(C) a dense film, the overall thickness of which lies in the range of about 1 to about 100 microns, preferably resting on a net or other support.

18. A membrane according to either claim 16 or claim 17, wherein component (b) is covalently bound to component (a), and component (b) is preferably also cross-linked with itself.

19. A process for the separation of preselected ions from other ions in the same solution which possess the same sign, which comprises subjecting said solution to the action of a membrane according to any of claims 16 to 18.

20. A process according to claim 19, wherein said preselected ions and said other ions bear negative charges, preferably identical unit negative charges, most preferably the preselected ions being nitrate ions and the said other ions being other monovalent anions.

21. A method for the performance of selective electrodialytic separation of preselected ions from other ions in the same solution which possess the same sign, which comprises applying a current to an electrodialysis unit comprising at least one membrane according to any of claims 16 to 20.

22. A selective electrodialysis unit for the performance of selective electrodialytic separation of a first group of charged ions from a solution containing other charged ions having the same sign as said first group comprising at least one thin, dense non-porous charged electrodialysis membrane made of water-insoluble hydrophobic polymeric material containing covalently bound ionizable groups, wherein said membrane separates at least one diluting compartment from at least one concentrating compartment in said unit and wherein said membrane is in the form of a polymeric matrix optionally supported on a porous support and having a dielectric constant and composition preselected to induce selective ion dissociation of said first group of charged ions upon the passage of current therethrough, and thereby to effect a substantial ion migration of said selected ion group from at least one diluting compartment to at least one concentrating compartment in said unit and its preferential transference across said membrane at a fraction larger than its relative concentration in solution;

and said membrane being further characterized in that it comprises:

(a) an ion transport selective film matrix formed from one or more hydrophobic, film-forming polymers comprising covalently-attached ionizable radicals including quaternary ammonium radicals bound to the carbon atoms of the polymer backbone in a manner defined in claim 16; and

(b) a polymer which is effective to reduce the electrical resistance per micron thickness of film (a) by at least about one-half of an order of magnitude, and which is derived from units comprising monomers which contain amino groups.

23. A selective electrodialysis unit according to claim 22, adapted for the treatment of an aqueous stream containing nitrate, bicarbonate and sulfate ions, and for the selective transportation of nitrate ions from the diluting to the concentrating compartments of said unit without accompanying transport of said bicarbonate and sulfate ions, whereby the problem of scale formation on said unit is substantially reduced.

24. A selective electrodialysis unit according to either claim 22 or claim 23, wherein said membrane is selected from the group consisting of asymmetric, composite and thin supported charged membranes.

25. A selective electrodialysis unit according to any of claims 22 to 24, wherein said first group of charged ions are nitrate ions, or are selected from the group consisting of positively or negatively charged organic molecules.

26. A selective electrodialysis unit according to any of claims 22 to 25, wherein said membrane is characterized by a low dielectric constant in the range of about 2 to about 7.

27. A selective electrodialysis unit according to claim 22, adapted for the treatment of an aqueous stream containing nitrate, bicarbonate, chloride and sulfate ions, and for the selective transportation of nitrate ions from the diluting to the concentrating compartments of said unit without accompanying transport of said bicarbonate, chloride and sulfate ions, for producing a concentrated brine rich in nitrate ions which can be used for fertilization purposes.

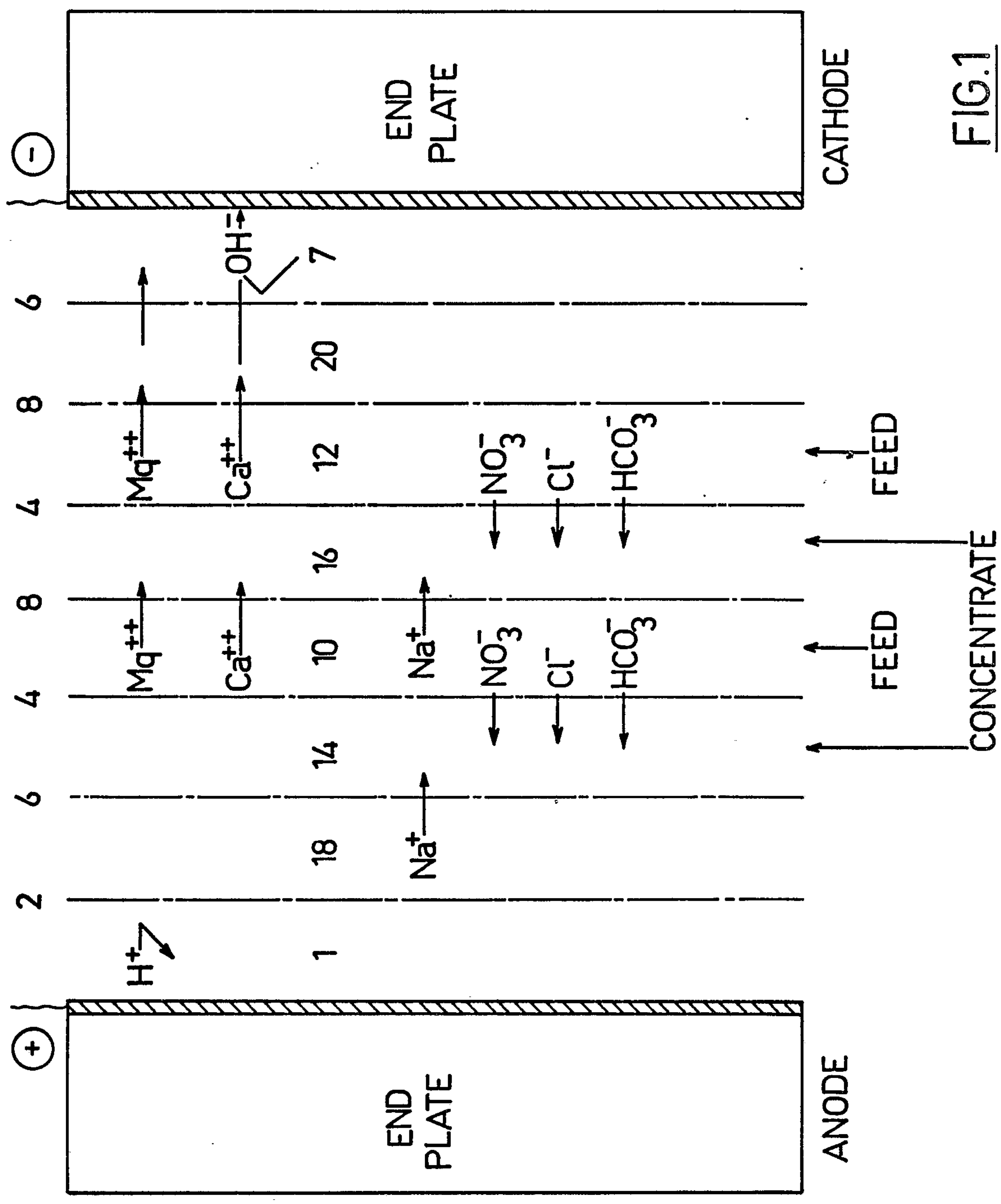

END PLATE
CATHODE
END PLATE
ANODE
+
−
H+
OH−
Mg++
Ca++
Na+
NO3−
Cl−
HCO3−
1
2
4
6
7
8
10
12
14
16
18
20
FEED
FEED
CONCENTRATE


FIG.1